(19) Europäisches Patentamt
European Patent Office
Office européen des brevets

(11) **EP 2 887 530 B1**

(12) **EUROPÄISCHE PATENTSCHRIFT**

(45) Veröffentlichungstag und Bekanntmachung des Hinweises auf die Patenterteilung:
**08.05.2019  Patentblatt 2019/19**

(51) Int Cl.:
***H02M 7/493*** *(2007.01)*          ***H02M 7/48*** *(2007.01)*

(21) Anmeldenummer: **13198901.4**

(22) Anmeldetag: **20.12.2013**

(54) **Umrichterbaugruppe mit direkt miteinander verbundenen Phasen mehrerer Wechselrichter**

Converter assembly with phases of multiple inverters that can be connected together directly

Module convertisseur comprenant des phases de plusieurs onduleurs reliées directement les unes aux autres

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.06.2015  Patentblatt 2015/26**

(73) Patentinhaber: **Siemens Aktiengesellschaft**
**80333 München (DE)**

(72) Erfinder:
• **Donat, Albrecht**
**91462 Dachsbach (DE)**
• **Göpfrich, Kurt**
**91058 Erlangen (DE)**
• **Schwesig, Günter**
**91054 Erlangen (DE)**

(56) Entgegenhaltungen:
**WO-A1-92/09137     US-A1- 2004 262 057**

• **HAN DI ET AL: "Analysis of a SiC three-phase voltage source inverter under various current and power factor operations", IECON 2013 - 39TH ANNUAL CONFERENCE OF THE IEEE INDUSTRIAL ELECTRONICS SOCIETY, IEEE, 10. November 2013 (2013-11-10), Seiten 447-452, XP032539501, ISSN: 1553-572X, DOI: 10.1109/IECON.2013.6699177 [gefunden am 2013-12-30]**
• **Siemens: "SINAMICS drives Flexibel und hochperformant - Das Antriebssystem SINAMICS S120", , 1. Januar 2008 (2008-01-01), XP055143684, Gefunden im Internet: URL:http://w3app.siemens.com/mcms/infocent er/dokumentencenter/ce/Documentsu20Brochu r es/e20001-a30-p670-v1.pdf [gefunden am 2014-10-01]**

**Beschreibung**

Die vorliegende Erfindung betrifft eine Umrichterbaugruppe,

- wobei die Umrichterbaugruppe mindestens einen ersten und einen zweiten Wechselrichter sowie eine Steuereinrichtung aufweist,
- wobei den Wechselrichtern einheitlich eine Eingangsspannung zugeführt wird und die Wechselrichter die ihnen zugeführte Eingangsspannung jeweils in eine Wechselspannung mit mehreren Phasen konvertieren.

Derartige Umrichterbaugruppen sind allgemein bekannt. Rein beispielhaft wird auf den Prospekt "SINAMICS S120 - das flexible, hochperformante Antriebssystem" der Siemens AG verwiesen.

Bei industriellen Anwendungen - beispielsweise bei Werkzeugmaschinen oder allgemein bei Industrieantrieben - werden für Maschinen mit mehreren Achsen oftmals Systeme eingesetzt, bei welchen zunächst mittels eines zentralen Einspeisegeräts aus einer ein- oder mehrphasigen Netz-Wechselspannung eine Gleichspannung erzeugt wird. An diese Gleichspannung werden Umrichterbaugruppen angeschlossen, mittels derer die einzelnen Achsen mit elektrischer Energie versorgt werden. Die Umrichterbaugruppen sind meist (zumindest im wesentlichen) quaderförmig ausgebildet, wobei ihre Bauhöhe und ihre Bautiefe einheitlich ist und ihre Baubreite je nach Leistungsanforderung variiert. Ein derartiger Verbund, bestehend aus einem zentralen Einspeisegerät und mehreren Umrichterbaugruppen, wird oftmals Booksize genannt, weil die einzelnen Module wie Bücher in einer Reihe nebeneinander angeordnet sind.

Als besonders platzsparend und optimal bezüglich der Skalierbarkeit hat sich herausgestellt, die Umrichtermodule teilweise als sogenannte Einachsmodule und teilweise als sogenannte Zweiachsmodule auszubilden. Bei einem Einachsmodul ist auf der jeweiligen Umrichterbaugruppe ein einziger Wechselrichter angeordnet, dessen Phasen phasenweise mit einem jeweiligen Kontakt eines Lastanschlusses der Umrichterbaugruppe verbunden sind, so dass an dem jeweiligen Kontakt des Lastanschlusses die vom Wechselrichter abgegebene Spannung der jeweiligen Phase ansteht. Bei einem Zweiachsmodul weist die Umrichterbaugruppe - so wie obenstehend ausgeführt - einen ersten und einen zweiten Wechselrichter auf, wobei den Wechselrichtern einheitlich die Eingangsspannung zugeführt wird und die Wechselrichter die ihnen zugeführte Eingangsspannung jeweils in eine Wechselspannung mit mehreren Phasen konvertieren. Die Phasen der Wechselrichter sind elektrisch voneinander getrennt. An den Kontakten des Lastanschlusses steht phasenweise die vom ersten Wechselrichter abgegebene Spannung der jeweiligen Phase an. An Kontakten eines weiteren Lastanschlusses steht phasenweise die vom zweiten Wechselrichter abgegebene Spannung der jeweiligen Phase an. Von den Wechselrichtern abgegebene Phasenströme werden individuell erfasst und der Steuereinrichtung zugeführt. Die Steuereinrichtung steuert die Wechselrichter unabhängig voneinander an.

Aus der WO 92/09137 A1 und der US 2004/0 262 057 A1 ist bekannt, die Phasen des ersten Wechselrichters phasenweise direkt elektrisch mit einem jeweiligen Kontakt eines Lastanschlusses der Umrichterbaugruppe zu verbinden und die Phasen des zweiten Wechselrichters phasenweise elektrisch über Drosseln mit dem jeweiligen Kontakt desselben Lastanschlusses zu verbinden. Diese Vorgehensweise muss ergriffen werden, weil es zwar möglich ist, dass eine Steuereinrichtung der Umrichterbaugruppe die Wechselrichter koordiniert ansteuert. Aufgrund nicht deterministischer Schaltverzögerungen von Schaltelementen der Wechselrichter ist es jedoch nicht möglich, zu gewährleisten, dass die Wechselspannung der jeweiligen Phase von den Wechselrichtern gleichphasig an den jeweiligen Kontakt des Lastanschlusses geschaltet wird. Die Drosseln sind daher zur Vermeidung kurzzeitiger Kurzschlüsse erforderlich. Die genannte WO 92/09137 A1 erörtert jedoch auch den theoretisch möglichen Wegfall der Drosseln, bemerkt jedoch dazu, dass er sich kaum realisieren lässt. Weiterhin kann bei Umrichterbaugruppen mit parallel geschalteten Wechselrichtern nach dem Stand der Technik aufgrund der nicht deterministischen Schaltverzögerungen trotz der koordinierten Ansteuerung beider Wechselrichter nur ein maximaler Laststrom getrieben werden, der kleiner als die Summe der von den beiden Wechselrichtern für sich betrachtet maximal treibbaren Phasenströme ist. In der Praxis werden daher in einem derartigen Fall, in dem ein maximaler Laststrom benötigt wird, der größer als der von einem der beiden Wechselrichter für sich betrachtet maximal treibbare Phasenstrom ist, nicht die beiden Wechselrichter koordiniert betrieben. Stattdessen wird ein Einachsmodul mit einem größer dimensionierten Wechselrichter verwendet. Dies führt zu einer erhöhten Typenvielfalt mit den damit einhergehenden Nachteilen.

Aus dem Fachaufsatz "Analysis of a SiC Three-Phase Voltage Source Inverter Under Various Current and Power Factor Operations" von Di Han et al., IECON 2013 - 39TH ANNUAL CONFERENCE OF THE IEEE INDUSTRIAL ELECTRONICS SOCIETY, IEEE, 10. November 2013, Seiten 447 bis 452, ist eine Umrichterbaugruppe bekannt, welche einen Wechselrichter aufweist, der als Schaltelemente Siliziumcarbid-MOSFETs enthält. Dem Wechselrichter wird eine Eingangsspannung zugeführt, die von dem Wechselrichter unter Steuerung durch eine Steuereinrichtung in eine mehrphasige Wechselspannung konvertiert wird.

Aus dem Prospekt "SINAMICS drives - Answers for industry" der Siemens AG ist eine Umrichterbaugruppe bekannt, wobei die Umrichterbaugruppe mindestens einen ersten und einen zweiten Wechselrichter sowie eine Steuereinrichtung aufweist, wobei den Wechselrichtern einheitlich eine Eingangsspannung zugeführt wird und die Wechselrichter die ihnen zugeführte Eingangsspannung jeweils in eine Wechselspannung mit mehreren Phasen konvertieren, wobei von den Wechselrichtern abgegebene Phasenströme individuell erfasst und der Steuereinrichtung zugeführt werden, wobei an einem jeweiligen Kontakt eines ersten Ausgangsanschlusses die vom ersten Wechselrichter abgegebene Spannung der jeweiligen Phase ansteht, an einem jeweiligen Kontakt eines zweiten Ausgangsanschlusses die vom zweiten Wechselrichter abgegebene Spannung der jeweiligen Phase ansteht und die Steuereinrichtung die Wechselrichter unabhängig voneinander ansteuert, wobei die Wechselrichter und die Steuereinrichtung auf einem Basisteil der Umrichterbaugruppe angeordnet sind.

Die Aufgabe der vorliegenden Erfindung besteht darin, eine Umrichterbaugruppe der eingangs genannten Art zu schaffen, mittels derer die Nachteile des Standes der Technik vermieden werden können. Insbesondere sollen die beiden Wechselrichter optional koordiniert betrieben werden können.

Die Aufgabe wird durch eine Umrichterbaugruppe mit den Merkmalen des Anspruchs 1 gelöst. Vorteilhafte Ausgestaltungen der erfindungsgemäßen Umrichterbaugruppe sind Gegenstand der abhängigen Ansprüche 2 bis 17.

Erfindungsgemäß wird eine Umrichterbaugruppe der eingangs genannten Art dadurch weiter ausgebildet,

- dass die Wechselrichter als Schaltelemente Siliziumcarbid-MOSFETs enthalten,
- dass die Phasen des zweiten Wechselrichters über eine lösbare Verbindung phasenweise elektrisch direkt mit den Phasen des ersten Wechselrichters und einem jeweiligen Kontakt eines Lastanschlusses der Umrichterbaugruppe verbunden sind und die Phasen des ersten Wechselrichters unlösbar oder über die lösbare Verbindung phasenweise elektrisch direkt mit dem jeweiligen Kontakt des Lastanschlusses verbunden sind,
- dass von den Wechselrichtern abgegebene Phasenströme individuell erfasst und der Steuereinrichtung zugeführt werden,
- dass bei hergestellter Verbindung an dem jeweiligen Kontakt des Lastanschlusses sowohl die vom ersten Wechselrichter als auch die vom zweiten Wechselrichter abgegebene Spannung der jeweiligen Phase ansteht und die Steuereinrichtung die Wechselrichter derart koordiniert ansteuert, dass die Wechselspannung der jeweiligen Phase von den Wechselrichtern gleichphasig an den jeweiligen Kontakt des Lastanschlusses geschaltet wird,
- dass bei gelöster Verbindung an dem jeweiligen Kontakt des Lastanschlusses oder einem jeweiligen Kontakt eines vom Lastanschluss verschiedenen ersten Ausgangsanschlusses die vom ersten Wechselrichter abgegebene Spannung der jeweiligen Phase ansteht, an einem jeweiligen Kontakt eines zweiten Ausgangsanschlusses die vom zweiten Wechselrichter abgegebene Spannung der jeweiligen Phase ansteht und die Steuereinrichtung die Wechselrichter unabhängig voneinander ansteuert,

- dass die Wechselrichter und die Steuereinrichtung auf einem Basisteil der Umrichterbaugruppe angeordnet sind und
- dass die lösbare Verbindung auf dem Basisteil ortsfest angeordnete Kontakte und eine mit diesen Kontakten verbindbare und von diesen Kontakten lösbare mehrphasige Kontaktbrücke aufweist.

Durch diese Ausgestaltung ist ein und dieselbe Umrichterbaugruppe nach Bedarf alternativ als Einachsmodul oder als Zweiachsmodul betreibbar. Es müssen lediglich die lösbare Verbindung hergestellt oder aufgehoben werden und die Wechselrichter von der Steuereinrichtung entsprechend angesteuert werden.

Siliziumcarbid-MOSFETs weisen den Vorteil auf, dass sie mit extrem geringer Schaltverzögerungen - teilweise sogar mit Schaltverzögerungen im Nanosekunden-Bereich - geschaltet werden können. Dadurch ist - im Rahmen der für Leistungsanwendungen erforderlichen Schaltzeiten - eine deterministische Reaktion der Schaltelemente gewährleistet. Somit ist es möglich, die Phasen der Wechselrichter phasenweise elektrisch direkt miteinander zu verbinden, ohne kurzzeitige Kurzschlüsse in Kauf nehmen zu müssen.

In der Regel weist die Umrichterbaugruppe ein Gehäuse auf, von dem zumindest die Wechselrichter und die Steuereinrichtung berührsicher umgeben sind. Der Begriff "berührsicher" ist im Sinne einer elektrischen Berührsicherheit zu verstehen. Es soll also ausgeschlossen sein, dass eine Person versehentlich spannungsführende Teile der Umrichterbaugruppe berührt. Beispielsweise kann das Gehäuse den Wechselrichter und die Steuereinrichtung in der Schutzart IP20 umgeben. Es sind jedoch je nach Lage des Einzelfalls auch andere Schutzarten möglich, beispielsweise IP44, IP54 oder IP65. Die Anordnung des Wechselrichters und der Steuereinrichtung in dem Gehäuse bewirkt insbesondere eine einfache und zuverlässige Handhabbarkeit der Umrichterbaugruppe.

Die Eingangsspannung wird den Wechselrichtern vorzugsweise über eine vorkonfektionierte, von außerhalb des Gehäuses zugängliche Steckverbindung zugeführt. Dadurch ist auf einfache Weise eine Zuführung der Eingangsspannung zur Umrichterbaugruppe möglich.

Oftmals ist das Gehäuse (im wesentlichen) quaderförmig mit einer kleinen, einer mittleren und einer großen Kantenlänge ausgebildet. Die kleine Kantenlänge beträgt in diesem Fall vorzugsweise maximal 120 mm. Die kleine Kantenlänge kann beispielsweise zwischen 40 mm und 60 mm liegen, insbesondere bei ca. 50 mm. Die mittlere Kantenlänge - die größer als die kleine Kantenlänge ist - liegt vorzugsweise zwischen 200 mm und 300 mm, beispielsweise zwischen 215 mm bis 240 mm oder zwischen 260 mm bis 285 mm. Die große Kantenlänge - die ihrerseits größer als die mittlere Kantenlänge ist - beträgt vorzugsweise mindestens 300 mm, beispielsweise zwischen

350 mm und 400 mm.

Auch in diesem Fall kann die Eingangsspannung den Wechselrichtern über eine vorkonfektionierte, von außerhalb des Gehäuses zugängliche Steckverbindung zugeführt werden. Die Steckverbindung ist in diesem Fall vorzugsweise von einer Seite des Gehäuses aus zugänglich, deren Abmessungen mit der kleinen und der großen Kantenlänge korrespondieren. Diese Ausgestaltung entspricht im Rahmen der obenstehend in Verbindung mit dem Stand der Technik erwähnten Anordnung, bei welcher die einzelnen Module wie Bücher in einer Reihe nebeneinander angeordnet sind (Booksize), einer Anordnung der Steckverbindung an der Rückseite des Gehäuses. Meist liegt diese Seite derjenigen Seite des Gehäuses gegenüber, an welcher - je nach Konfiguration der Umrichterbaugruppe - der Lastanschluss, die Lastanschlüsse, die Ausgangsanschlüsse und/oder der Lastanschluss und der zweite Ausgangsanschluss angeordnet sind.

Den Kontakten des Lastanschlusses sind über die Wechselrichter jeweilige Phasenströme zuführbar. Die Phasenströme sind prinzipiell beliebig wählbar. Vorzugsweise jedoch sind die Phasenströme kleiner als 1000 A, insbesondere kleiner als 100 A. Beispielsweise können die Phasenströme jeweils auf 50 A oder weniger begrenzt sein, beispielsweise auf ca. 15 A bis ca. 20 A. Diese Ausgestaltung ist insbesondere deshalb von Vorteil, weil in diesem Fall das Bauvolumen einer an sich einheitlichen Umrichterbaugruppe gut ausgenutzt werden kann.

Besonders bevorzugt ist, dass die Steuereinrichtung selbsttätig erkennt, ob die Phasen der Wechselrichter über die lösbare Verbindung phasenweise direkt miteinander verbunden sind oder nicht, und dementsprechend entweder die Wechselrichter koordiniert oder unabhängig voneinander ansteuert. Beispielsweise kann die lösbare Verbindung einen zusätzlichen Spannungspfad umfassen, mittels dessen der Steuereinrichtung je nach Zustand der lösbaren Verbindung ein vorbestimmter Spannungspegel zugeführt wird oder nicht zugeführt wird. Durch Auswertung des anstehenden Spannungspegels kann die Steuereinrichtung in diesem Fall den Zustand der lösbaren Verbindung automatisiert erfassen und auswerten. Alternativ ist es beispielsweise denkbar, dass die Steuereinrichtung in einem Testbetrieb zunächst nur einen der beiden Wechselrichter ansteuert und prüft, ob die mittels des einen Wechselrichters geschalteten Spannungen an den Phasen des anderen Wechselrichters auftreten oder nicht.

Es ist möglich, dass der erste Ausgangsanschluss nicht vorhanden ist. In diesem Fall sind die Kontakte der lösbaren Verbindung von den Kontakten des Lastanschlusses und des zweiten Ausgangsanschlusses verschiedene Kontakte. In dem Fall, dass die Phasen der Wechselrichter über die lösbare Verbindung nicht miteinander verbunden sind, steht am jeweiligen Kontakt des Lastanschlusses die vom ersten Wechselrichter abgegebene Spannung der jeweiligen Phase an. Bei dieser Ausgestaltung muss der Lastanschluss - im Gegensatz zum zweiten Ausgangsanschluss - eine Stromtragfähigkeit aufweisen, welche der Summe der von beiden Wechselrichtern treibbaren Phasenströme entspricht. Der zweite Ausgangsanschluss hingegen muss lediglich eine Stromtragfähigkeit aufweisen, welcher dem von dem zweiten Wechselrichter allein treibbaren Phasenstrom entspricht.

Es ist bei dieser Ausgestaltung möglich, dass der zweite Ausgangsanschluss stets mit den Phasen des zweiten Wechselrichters verbunden ist. In diesem Fall kann prinzipiell eine Last alternativ zum Lastanschluss auch an den zweiten Ausgangsanschluss angeschlossen werden. Alternativ und bevorzugt ist jedoch, dass durch das direkte Verbinden der Phasen der Wechselrichter miteinander der zweite Ausgangsanschluss von den Phasen des zweiten Wechselrichters getrennt wird und durch das Trennen der Phasen der Wechselrichter voneinander der zweite Ausgangsanschluss mit den Phasen des zweiten Wechselrichters verbunden wird.

Es ist bei dieser Ausgestaltung weiterhin möglich, dass die mehrphasige Kontaktbrücke ein eigenständiges, getrennt von der Umrichterbaugruppe handhabbares Element ist. Alternativ kann die mehrphasige Kontaktbrücke beispielsweise als mehrphasiger, auf dem Basisteil angeordneter, bistabiler Schalter ausgebildet sein. Der mehrphasige Schalter kann beispielsweise an einer Frontseite der Umrichterbaugruppe angeordnet sein, an welcher auch der Lastanschluss und der zweite Ausgangsanschluss angeordnet sind. Alternativ ist es möglich, dass die Wechselrichter und die Steuereinrichtung auf einer Leiterplatte angeordnet sind, dass auf der Leiterplatte die Kontakte der lösbaren Verbindung angeordnet sind und dass durch manuelles Stecken der Kontaktbrücke ein Überbrücken der Kontakte erfolgt.

Im letztgenannten Fall können beispielsweise die ortsfest auf dem Basisteil angeordneten Kontakte der lösbaren Verbindung als Teil einer Steckverbindung ausgebildet sein, die von außerhalb des Gehäuses aus zugänglich ist. Weiterhin kann die Kontaktbrücke in diesem Fall ein separates, nicht mit dem Gehäuse verbundenes Element sein, wobei das Gehäuse eine Halterung und/oder Aufnahme aufweist, in welcher die Kontaktbrücke gehalten und aufgenommen ist, wenn sie nicht auf die Kontakte der lösbaren Verbindung aufgesteckt ist.

Alternativ ist es möglich, dass der erste Ausgangsanschluss vorhanden ist. In diesem Fall sind vorzugsweise die Kontakte der lösbaren Verbindung mit den Kontakten der Ausgangsanschlüsse identisch. Der Lastanschluss ist in diesem Fall vorzugsweise auf der mehrphasigen Kontaktbrücke angeordnet.

Bei dieser Ausgestaltung können die Ausgangsanschlüsse insbesondere kleiner dimensioniert sein als der Lastanschluss. Dies hat Kostenvorteile.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    eine erste mögliche Ausgestaltung einer Umrichterbaugruppe,

FIG 2    ein Schaltelement,

FIG 3    eine zweite mögliche Ausgestaltung einer Umrichterbaugruppe,

FIG 4    eine dritte mögliche Ausgestaltung einer Umrichterbaugruppe, die jedoch nicht Gegenstand der vorliegenden Erfindung ist,

FIG 5    eine Modifikation der Umrichterbaugruppe von FIG 4, die ebenfalls nicht Gegenstand der vorliegenden Erfindung ist, und

FIG 6    eine mögliche konstruktive Ausgestaltung der Umrichterbaugruppen der FIG 1, 3, 4 und 5.

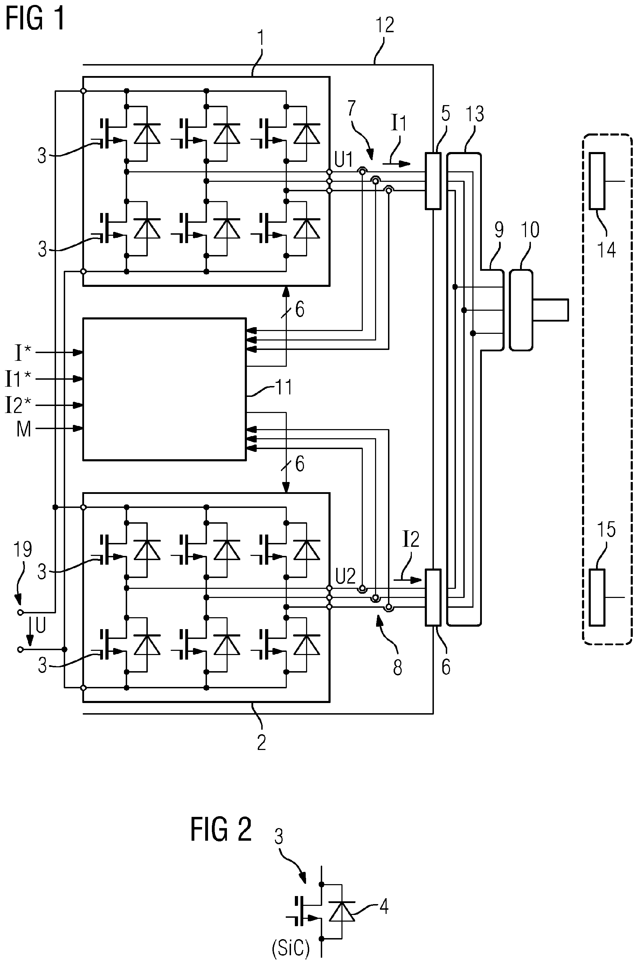

Gemäß FIG 1 weist eine Umrichterbaugruppe mindestens einen ersten Wechselrichter 1 und einen zweiten Wechselrichter 2 auf. Den Wechselrichtern 1, 2 wird einheitlich eine Eingangsspannung U zugeführt. Die Eingangsspannung U ist in der Regel eine Gleichspannung. Prinzipiell könnte die Eingangsspannung U jedoch auch eine mehrphasige Wechselspannung sein. In jedem Fall liegt die Eingangsspannung U im Niederspannungsbereich, also im Falle einer Gleichspannung bei maximal 1000 V, im Falle einer Wechselspannung bei maximal 750 V. Die Wechselrichter 1, 2 konvertieren die ihnen zugeführte Eingangsspannung U jeweils in eine Wechselspannung U1, U2 mit mehreren Phasen (in der Regel entsprechend der Darstellung in FIG 1 mit drei Phasen). Die Wechselrichter 1, 2 weisen pro Phase jeweils (mindestens) zwei Schaltelemente 3 auf. Eines der Schaltelemente 3 ist - stellvertretend für alle Schaltelemente 3 - in FIG 2 näher dargestellt.

Gemäß FIG 2 ist das Schaltelement 3 als MOSFET ausgebildet, und zwar als Siliziumcarbid (SiC)-MOSFET. Dem Schaltelement 3 ist eine Freilaufdiode 4 parallel geschaltet. Die Freilaufdiode 4 ist in der Regel ebenfalls aus Siliziumcarbid hergestellt. Dies ist jedoch von untergeordneter Bedeutung. Entscheidend ist, dass das Schaltelement 3 als Siliziumcarbid-MOSFET ausgebildet ist. Denn derartige Schaltelemente 3 weisen extrem kurze Schaltverzögerungen - meist unterhalb 1 $\mu$s, in manchen Fällen sogar unterhalb 100 ns - auf.

Die Phasen des ersten Wechselrichters 1 sind gemäß FIG 1 mit Kontakten eines ersten Ausgangsanschlusses 5 verbunden. In analoger Weise sind die Phasen des zweiten Wechselrichters 2 mit Kontakten eines zweiten Ausgangsanschlusses 6 verbunden. Weiterhin sind in den Leitungen der Phasen zu den Ausgangsanschlüssen 5, 6 Stromsensoren 7, 8 angeordnet.

Die Phasen der Wechselrichter 1, 2 sind phasenweise elektrisch direkt miteinander und mit einem jeweiligen Kontakt eines Lastanschlusses 9 der Umrichterbaugruppe verbunden. Der Begriff "elektrisch direkt miteinander verbunden" bedeutet in diesem Zusammenhang eine elektrische Verbindung miteinander, in welcher keine Induktivität angeordnet ist. Aufgrund der direkten Verbindung sowohl der Phasen des ersten Wechselrichters 1 als auch der Phasen des zweiten Wechselrichters 2 mit je einem Kontakt des Lastanschlusses 9 steht somit an dem jeweiligen Kontakt des Lastanschlusses 9 sowohl die vom ersten Wechselrichter 1 als auch die vom zweiten Wechselrichter 2 abgegebene Spannung der jeweiligen Phase an. Über einen Laststecker 10 an eine nicht dargestellte Last (beispielsweise eine elektrische Maschine) abgegebene Summenströme I korrespondierend daher mit der Summe der von den Wechselrichtern 1, 2 getriebenen Ströme I1, I2 der jeweiligen Phase.

Zur Vermeidung von Kurzschlüssen müssen die Wechselrichter 1, 2 derart koordiniert angesteuert werden, dass - bezogen auf die jeweilige Phase - die Wechselspannung U1, U2 des jeweiligen Wechselrichters 1, 2 von den Wechselrichtern 1, 2 gleichphasig an den jeweiligen Kontakt des Lastanschlusses 9 geschaltet wird. Zu diesem Zweck weist die Umrichterbaugruppe eine entsprechend ausgestaltete Steuereinrichtung 11 auf. Die Steuereinrichtung 11 koordiniert die Ansteuerung der Wechselrichter 1, 2 entsprechend. Die Steuereinrichtung 11 nimmt zu diesem Zweck zum einen einen Sollstrom I* entgegen und erfasst zum anderen mittels der Stromsensoren 7, 8 individuell die in den Phasen der Wechselrichter 1, 2 fließenden Phasenströme I1, I2. Die Steuereinrichtung 11 addiert die Phasenströme I1, I2 pro Phase zu dem jeweiligen Summenstrom I und führt entsprechend der Regelabweichung zwischen Sollstrom I* und Summenströmen I die Ansteuerung der Wechselrichter 1, 2 nach. Die Steuereinrichtung 11 kann nach Bedarf beispielsweise als softwareprogrammierbare Steuereinrichtung, als ASIC, als programmierbarer Logikbaustein usw. ausgebildet sein.

Bei der Ausgestaltung gemäß FIG 1 sind die Phasen der Wechselrichter 1, 2 über eine lösbare Verbindung phasenweise direkt miteinander verbunden. Insbesondere sind die Wechselrichter 1, 2 und die Steuereinrichtung 11 auf einem Basisteil 12 der Umrichterbaugruppe angeordnet. Die lösbare Verbindung weist zum einen Kontakte auf, die auf dem Basisteil 12 ortsfest angeordnet sind. Zum anderen weist die lösbare Verbindung eine mehrphasige Kontaktbrücke 13 auf, die mit diesen Kontakten verbindbar und von diesen Kontakten lösbar ist. Bei der Ausgestaltung gemäß FIG 1 sind die Kontakte der lösbaren Verbindung mit den Kontakten der Ausgangsanschlüsse 5, 6 identisch. Die Kontaktbrücke 13 wird bei der Ausgestaltung von FIG 1 also auf die Ausgangsanschlüsse 5, 6 aufgesetzt. Dementsprechend ist bei der Ausgestaltung von FIG 1 der Lastanschluss 9 auf der mehrphasigen Kontaktbrücke 13 angeordnet. Die Kontaktbrücke 13 ist somit sozusagen als Adapter oder Zwischenstecker ausgebildet, mittels dessen die von den Wechselrichtern 1, 2 geschalteten Spannungen U1, U2 und die von den Wechselrichtern 1, 2 getriebenen Phasenströme I1, I2 beim Lastanschluss 9 zusammengeführt werden.

Die Wechselrichter 1, 2 und die Ausgangsanschlüsse 5, 6 sind in der Regel gleich ausgebildet. Insbesondere ist ein maximaler Phasenstrom I1, der vom ersten Wechselrichter 1 getrieben werden kann, in der Regel genauso groß wie ein maximaler Phasenstrom I2, der vom zweiten Wechselrichter 2 getrieben werden kann. Der über den Lastanschluss 9 maximal fließende jeweilige Summenstrom I ist daher in der Regel doppelt so groß wie die maximalen Phasenströme I1, I2. Es ist daher möglich, entsprechend der Darstellung in FIG 1 die Ausgangsanschlüsse 5, 6 kleiner zu dimensionieren als den Lastanschluss 9.

Wie bereits erwähnt, ist die (direkte) Verbindung der Phasen der Wechselrichter 1, 2 miteinander lösbar. Wenn die Verbindung besteht, muss die Ansteuerung der Wechselrichter 1, 2 koordiniert sein, da anderenfalls ein Kurzschluss entstehen würde. Wenn die Verbindung der Phasen der Wechselrichter 1, 2 hingegen nicht besteht, ist die Kontaktbrücke 13 entfernt, also nicht vorhanden. Es ist daher in diesem Fall möglich, dass die Wechselrichter 1, 2 von der Steuereinrichtung 11 unabhängig voneinander angesteuert werden. Es ist daher möglich, anstelle der Kontaktbrücke 13 einen ersten Anschlussstecker 14 und einen zweiten Anschlussstecker 15 an den ersten und den zweiten Ausgangsanschluss 5, 6 anzusetzen. Von den Wechselrichtern 1, 2 getriebene Phasenströme I1, I2 können in diesem Fall über die Anschlussstecker 14, 15 an nicht dargestellte Lasten (beispielsweise elektrische Maschinen) abgegeben werden.

Unter der Voraussetzung, dass die lösbare Verbindung gelöst ist, steht somit an dem jeweiligen Kontakt des ersten Ausgangsanschlusses 5 die vom ersten Wechselrichter 1 abgegebene Spannung U1 an. Über den jeweiligen Kontakt des ersten Ausgangsanschlusses 5 wird der jeweilige Phasenstrom I1 getrieben. In analoger Weise steht an dem jeweiligen Kontakt des zweiten Ausgangsanschlusses 6 die vom zweiten Wechselrichter 2 abgegebene Spannung U2 an. Ebenso wird über den jeweiligen Kontakt des zweiten Ausgangsanschlusses 6 der jeweilige Phasenstrom I2 getrieben.

Wie zuvor werden auch in diesem Fall die in den Phasen der Wechselrichter 1, 2 fließenden Phasenströme I1, I2 von der Steuereinrichtung 11 mittels der Stromsensoren 7, 8 individuell erfasst. Die Steuereinrichtung 11 addiert hingegen in diesem Fall nicht die Phasenströme I1, I2 pro Phase zu dem jeweiligen Summenstrom I, sondern nimmt stattdessen für jeden der beiden Wechselrichter 1, 2 einen jeweiligen Sollstrom I1*, I2* entgegen. Die Steuereinrichtung 11 führt die Ansteuerung des jeweiligen Wechselrichters 1, 2 - unabhängig von der Ansteuerung des jeweils anderen Wechselrichters 2, 1 - entsprechend der Regelabweichung zwischen jeweiligem Sollstrom I1*, I2* und jeweiligen Summenströmen I1, I2 nach.

Das Umschalten der Steuereinrichtung 11 erfolgt in Abhängigkeit von einem Modensignal M. Es ist möglich, dass das Modensignal M der Steuereinrichtung 11 von außen explizit vorgegeben wird, beispielsweise mittels eines in den FIG nicht dargestellten Schalters. Vorzugsweise erkennt die Steuereinrichtung 11 jedoch selbsttätig, ob die Phasen der Wechselrichter 1, 2 über die lösbare Verbindung phasenweise direkt miteinander verbunden sind oder nicht. Dementsprechend steuert die Steuereinrichtung 11 entweder die Wechselrichter 1, 2 koordiniert oder unabhängig voneinander an. Möglichkeiten zur selbsttätigen Erkennung wurden obenstehend bereits erläutert.

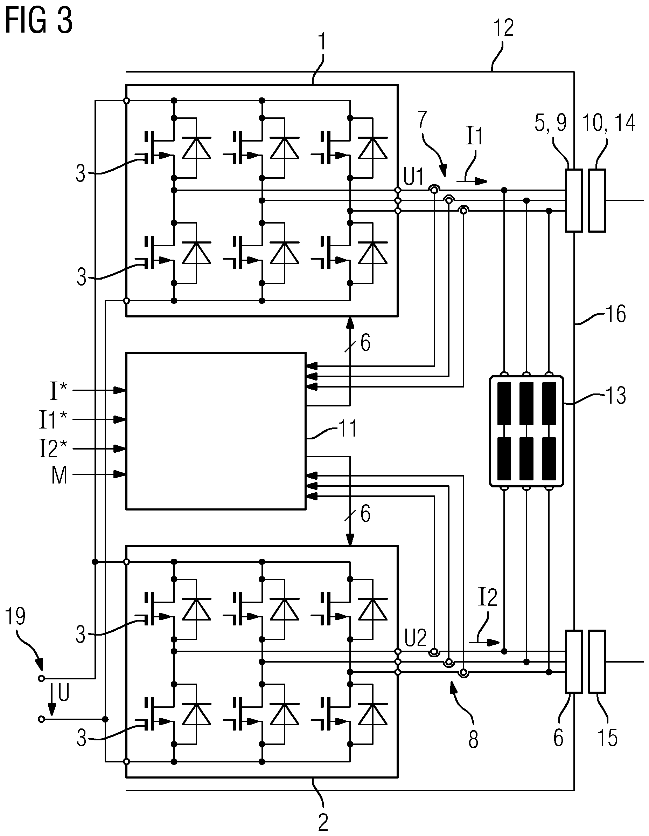

Die Ausgestaltung gemäß FIG 3 korrespondiert über weite Strecken mit der Ausgestaltung gemäß FIG 1. Nachstehend werden daher nur die Unterschiede der Ausgestaltung gemäß FIG 3 zu der Ausgestaltung gemäß FIG 1 erläutert.

Bei der Ausgestaltung gemäß FIG 3 ist der erste Ausgangsanschluss 5 - im Sinne eines eigenständigen, vom Lastanschluss 9 verschiedenen Anschlusses - nicht vorhanden. Anders ausgedrückt: Der erste Ausgangsanschluss 5 und der Lastanschluss 9 sind ein und derselbe Anschluss. Weiterhin ist die lösbare Verbindung der Phasen der Wechselrichter 1, 2 zwar weiterhin gegeben, die Kontakte der lösbaren Verbindung sind jedoch von den Kontakten des Lastanschlusses 9 und des zweiten Ausgangsanschlusses 6 verschiedene Kontakte.

Wenn die Phasen der Wechselrichter 1, 2 über die lösbare Verbindung miteinander verbunden sind, unterscheidet sich der Betrieb der Umrichterbaugruppe von FIG 3 nicht von dem Betrieb der Umrichterbaugruppe von FIG 1. Wenn hingegen die Phasen der Wechselrichter 1, 2 über die lösbare Verbindung nicht miteinander verbunden sind, steht - aufgrund der Identität von Lastanschluss 9 und erstem Ausgangsanschluss 5 - am jeweiligen Kontakt des Lastanschlusses 9 die vom ersten Wechselrichter 1 abgegebene Spannung U1 der jeweiligen Phase an. Bezüglich des zweiten Wechselrichters 2 und des zweiten Lastanschlusses 6 ist der Betrieb wie zuvor in Verbindung mit FIG 1 erläutert.

Es ist möglich, dass der zweite Ausgangsanschluss 6 stets mit den Phasen des zweiten Wechselrichters 2 verbunden ist. In dem Fall, dass die lösbare Verbindung der Phasen der Wechselrichter 1, 2 gelöst ist, ist dies bei der Ausgestaltung gemäß FIG 3 zwingend der Fall. Falls die lösbare Verbindung der Phasen 1, 2 hergestellt ist, kann die Verbindung des zweiten Ausgangsanschlusses 6 mit den Phasen des zweiten Wechselrichters 2 ebenfalls gegeben sein. In diesem Fall ist dies jedoch nicht zwingend erforderlich. Falls die Verbindung des zweiten Ausgangsanschlusses 6 auch in diesem Fall besteht, sind der Lastanschluss 9 und der zweiten Ausgangsanschluss 6 prinzipiell gleichwertig. Der Laststecker 10 könnte daher in diesem Fall - sofern der zweite Ausgangsanschluss 6 die erforderliche Stromtragfähigkeit aufweist - alternativ zum Lastanschluss 9 verwendet werden. Alternativ ist es möglich, dass der zweite Ausgangsanschluss 6 je nachdem, ob die direkte Verbindung der Phasen der Wechselrichter 1, 2 besteht oder nicht, aktiviert oder deaktiviert wird. Insbesondere ist es also möglich, dass durch das direkte Verbinden der Phasen der Wechselrichter 1, 2 miteinander der zweite Ausgangsanschluss 6 von den Phasen des zweiten Wechselrichters 2 getrennt wird. Umgekehrt wird in diesem Fall durch das Trennen der Phasen der Wechselrichter 1, 2 voneinander der zweite Ausgangsanschluss 6 mit den Phasen des zweiten Wechselrichters 2 verbunden.

Die lösbare Verbindung kann im Falle der Ausgestaltung gemäß FIG 3 nach Bedarf ausgelegt sein. Beispielsweise kann die lösbare Verbindung einen mehrphasigen Schalter aufweisen, der an einer Frontseite der Umrichterbaugruppe angeordnet ist, d.h. an derjenigen Seite, an welcher auch der Lastanschluss 9 und der zweite Ausgangsanschluss 6 angeordnet sind. Alternativ können die Wechselrichter 1, 2 und die Steuereinrichtung 11 beispielsweise auf einer Leiterplatte 16 angeordnet sein, auf der ihrerseits ortsfest die Kontakte der lösbaren Verbindung angeordnet sind und welche mittels der mehrphasigen Kontaktbrücke 13 durch manuelles Stecken der Kontaktbrücke 13 überbrückt werden können. Die Leiterplatte 16 kann unter Umständen mit dem Basisteil 12 identisch sein.

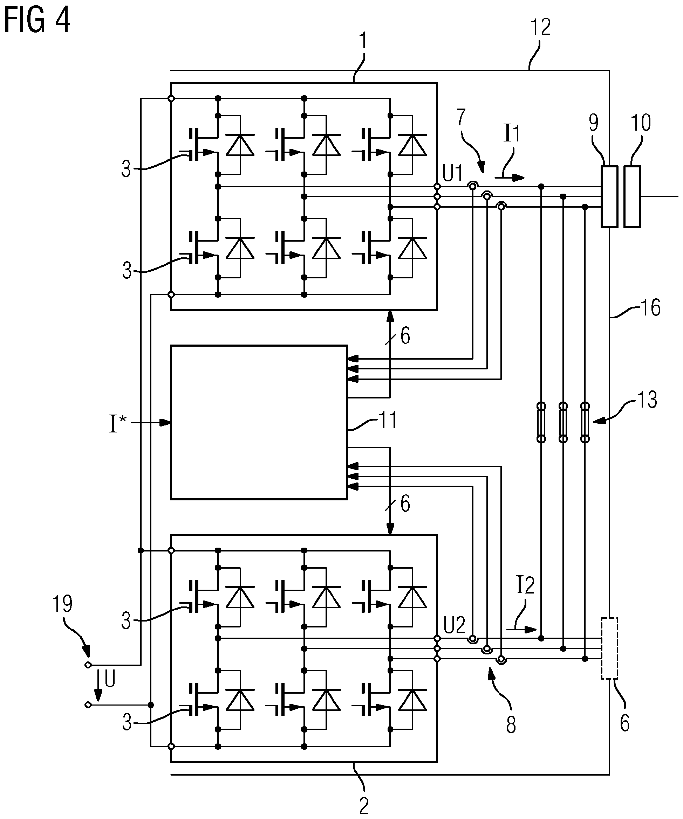

Die Ausgestaltung gemäß FIG 4 korrespondiert über weite Strecken mit der Ausgestaltung gemäß FIG 3. Nachstehend werden daher nur die Unterschiede der Ausgestaltung gemäß FIG 4 zu der Ausgestaltung gemäß FIG 3 erläutert.

Bei der Ausgestaltung der Umrichterbaugruppe gemäß FIG 4 sind die Phasen der Wechselrichter 1, 2 über eine unlösbare Verbindung phasenweise direkt miteinander verbunden. Die unlösbare Verbindung kann beispielsweise in Form von Leiterbahnen auf der Leiterplatte 16 realisiert sein. Alternativ kann beispielsweise entsprechend der Darstellung in FIG 4 die Kontaktbrücke 13 mit den ortsfesten Kontakten der Verbindung gelötet sein.

Bei der Ausgestaltung gemäß FIG 3 ist es - ebenso wie bei der Ausgestaltung gemäß FIG 1 - erforderlich, die Phasenströme I1, I2 individuell zu erfassen. Dies ist erforderlich, da anderenfalls der voneinander unabhängige Betrieb der Wechselrichter 1, 2 nicht realisiert werden könnte. Bei der Ausgestaltung gemäß FIG 4 ist ein voneinander unabhängiger Betrieb der Wechselrichter 1, 2 nicht möglich. Es ist daher entsprechend der Darstellung in FIG 4 zwar weiterhin möglich, die Phasenströme I1, I2 individuell zu erfassen und der Steuereinrichtung 11 zuzuführen. In diesem Fall werden die Phasenströme I1, I2 von der Steuereinrichtung 11 zu den Summenströmen I addiert. Die Nachführung der Ansteuerung der Wechselrichter 1, 2 erfolgt wie zuvor in Verbindung mit FIG 1 erläutert. Alternativ ist es bei der Ausgestaltung gemäß FIG 4 jedoch möglich, anstelle der Phasenströme I1, I2 direkt die Summenströme I zu erfassen. In diesem Fall ist keine Addition durch die Steuereinrichtung 11 mehr erforderlich.

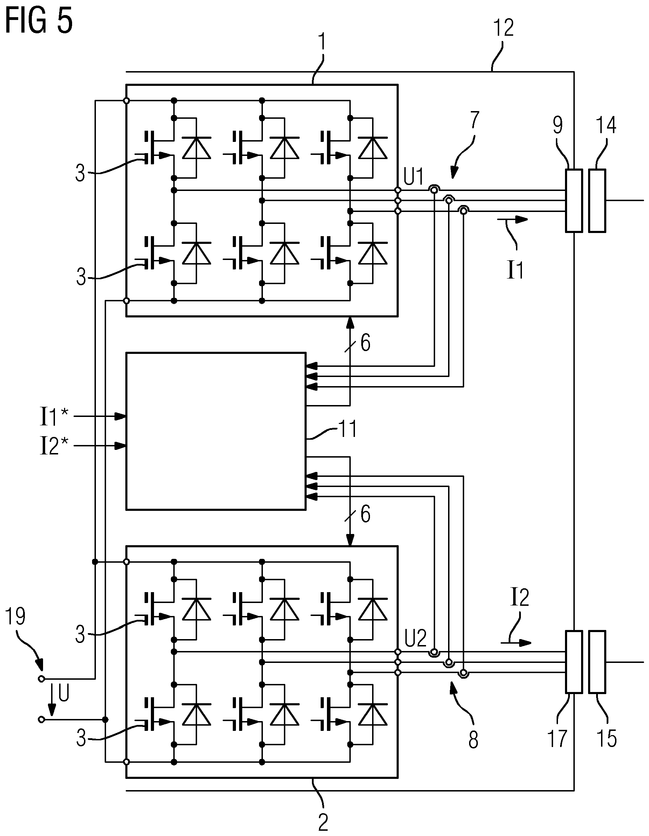

Bei der Umrichterbaugruppe gemäß FIG 4 ist aufgrund des Umstands, dass die direkte Verbindung unlösbar ist, ausschließlich ein koordinierter Betrieb der Wechselrichter 1, 2 möglich. Es werden also stets die Wechselspannungen U1, U2 an den jeweiligen Kontakt des Lastanschlusses 9 geschaltet. Aus diesem Grund ist es möglich, dass der zweite Ausgangsanschluss 6 entfällt. Alternativ kann der zweite Ausgangsanschluss 6 jedoch vorhanden sein. Dies kann aus Gründen einer einheitlichen Fertigung - siehe die nachfolgenden Ausführungen zu der Umrichterbaugruppe gemäß FIG 5 - von Vorteil sein. Aufgrund des Umstands, dass der zweite Ausgangsanschluss 6 entfallen kann, ist der zweite Ausgangsanschluss 6 in FIG 4 nur gestrichelt eingezeichnet.

Falls, aufbauend auf der Umrichterbaugruppe gemäß FIG 4, ein Zweiachsmodul - also eine weitere, zwar auf der Umrichterbaugruppe gemäß FIG 4 aufbauende, aber von der Umrichterbaugruppe gemäß FIG 4 verschiedene Umrichterbaugruppe - geschaffen werden soll, ist dies auf einfache Weise möglich. In diesem Fall müssen, gegenüber der Umrichterbaugruppe gemäß FIG 4, lediglich die nachfolgend in Verbindung mit FIG 5 erläuterten Änderungen vorgenommen werden: Zunächst müssen die Phasen der Wechselrichter 1, 2 phasenweise elektrisch voneinander getrennt sein. Die direkte elektrische Verbindung muss also entfallen.

Die Kontakte des Lastanschlusses 9 sind bei der Umrichterbaugruppe gemäß FIG 5 mit den Phasen des ersten Wechselrichters 1 verbunden. An den Kontakten des Lastanschlusses 9 der Umrichterbaugruppe von FIG 5 stehen somit phasenweise die vom ersten Wechselrichter 1 dieser Umrichterbaugruppe abgegebenen Spannungen U1 an. Über die Kontakte des Lastanschlusses 9 der Umrichterbaugruppe von FIG 5 fließen in diesem Fall die vom ersten Wechselrichter 1 dieser Umrichterbaugruppe getriebenen Phasenströme I1.

Weiterhin ist - analog zu den Ausgangsanschlüssen 5, 6 der Umrichterbaugruppe von FIG 1 - zusätzlich zum Lastanschluss 9 ein weiterer Lastanschluss 17 vorhanden. Der weitere Lastanschluss 17 ist mit dem zweiten Wechselrichter 2 der Umrichterbaugruppe von FIG 5 verbunden. An den Kontakten des weiteren Lastanschlusses 17 stehen somit phasenweise die vom zweiten Wechselrichter 2 dieser Umrichterbaugruppe abgegebenen Spannungen U2 an. Über die Kontakte des weiteren Lastanschlusses 17 fließen in diesem Fall die vom zweiten Wechselrichter 2 dieser Umrichterbaugruppe getriebenen Phasenströme I2. Der weitere Lastanschluss 17 der Umrichterbaugruppe von FIG 5 entspricht somit von seiner Funktion her dem zweiten Ausgangsanschluss 6 der Umrichterbaugruppen der FIG 1 und 3.

Weiterhin müssen die von den Wechselrichtern 1, 2 der Umrichterbaugruppe von FIG 5 abgegebenen Phasenströme I1, I2 individuell erfasst und der Steuereinrichtung 11 der Umrichterbaugruppe von FIG 5 zugeführt werden. Bei der Umrichterbaugruppe von FIG 4 ist dies zwar ebenfalls möglich, bei der Umrichterbaugruppe von FIG 5 ist es jedoch zwingend erforderlich.

Schließlich führt die Steuereinrichtung 11 der Umrichterbaugruppe von FIG 5 die Ansteuerung des jeweiligen Wechselrichters 1, 2 - unabhängig von der Ansteuerung des jeweils anderen Wechselrichters 2, 1 - entsprechend der Regelabweichung zwischen jeweiligem Sollstrom I1*, I2* und jeweiligen Summenströmen I1, I2 nach.

Weitere Modifikationen sind nicht erforderlich. Im Übrigen kann die Umrichterbaugruppe von FIG 5 also baugleich zu der Umrichterbaugruppe von FIG 4 sein. Die Lastanschlüsse 9, 17 der Umrichterbaugruppe von FIG 5 müssen jedoch - analog zu den Ausgangsanschlüssen 5, 6 der Umrichterbaugruppe von FIG 1 - nur eine Stromtragfähigkeit aufweisen, die dem maximalen Phasenstrom I1, I2 eines der Wechselrichter 1, 2 der Umrichterbaugruppe von FIG 5 entspricht. Die Lastanschlüsse 9, 17 der Umrichterbaugruppe von FIG 5 können daher kleiner dimensioniert sein als der Lastanschluss 9 der Umrichterbaugruppe von FIG 4.

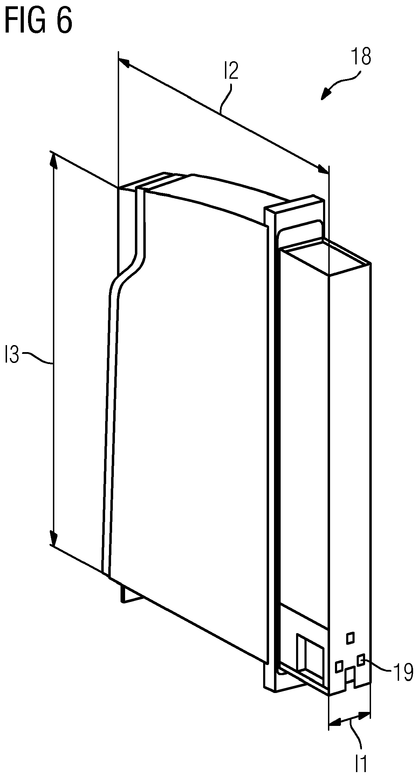

Die Umrichterbaugruppen der FIG 1 sowie der FIG 3 bis 5 weisen entsprechend der Darstellung in FIG 6 vorzugsweise ein Gehäuse 18 auf. In dem Gehäuse 18 sind zumindest die Wechselrichter 1, 2 und die Steuereinrichtung 11 angeordnet. Das Gehäuse 18 umgibt die Wechselrichter 1, 2 und die Steuereinrichtung 11 berührsicher. Ein Mensch ist daher nicht in der Lage, versehentlich mit seinen bloßen Händen spannungsführende Elemente der Umrichterbaugruppe zu berühren. Das Gehäuse 18 kann beispielsweise die Wechselrichter 1, 2 und die Steuereinrichtung 11 in der (allgemein bekannten) Schutzart IP20 umgeben.

Das Gehäuse 18 ist in der Regel (vollständig oder zumindest in wesentlichen) quaderförmig ausgebildet. Es weist daher eine kleine, eine mittlere und eine große Kantenlänge 11, 12, 13 auf, wobei für die Kantenlängen 11, 12, 13 die Relation

$$l1 < l2 < l3$$

gilt. Oftmals beträgt die kleine Kantenlänge 11 maximal 120 mm. Typisch ist eine kleine Kantenlänge 11 von ca. 40 mm bis ca. 60 mm (beispielsweise ca. 50 mm) oder von ca. 90 mm bis ca. 110 mm (beispielsweise ca. 100 mm). Die mittlere Kantenlänge 12 liegt in der Regel zwischen ca. 200 mm und ca. 300 mm. Beispielsweise kann die mittlere Kantenlänge 12 je nachdem, ob die Umrichterbaugruppe eine interne oder eine externe Entwärmung aufweist oder nicht, bei ca. 215 mm bis ca. 240 mm oder bei ca. 260 mm bis ca. 285 mm liegen. Die große Kantenlänge 13 beträgt vorzugsweise mindestens ca. 300 mm. Beispielsweise kann die große Kantenlänge 13 bei ca. 350 mm bis ca. 400 mm liegen. Insbesondere kann die große Kantenlänge 13 bei ca. 380 mm liegen. Oftmals korrespondiert die kleine Kantenlänge 11 mit einer Baubreite des Gehäuses 18, die mittlere Kantenlänge 12 mit einer Bautiefe des Gehäuses 18 und die große Kantenlänge 13 mit einer Bauhöhe des Gehäuses 18.

Die Eingangsspannung U wird den Wechselrichtern 1, 2 gemäß den FIG 1, 3, 4 und 5 über eine vorkonfektionierte Steckverbindung 19 zugeführt. Die Steckverbindung 19 ist gemäß FIG 6 von außerhalb des Gehäuses 18 zugänglich. Die Steckverbindung 19 kann insbesondere entsprechend der Darstellung in FIG 6 von einer Seite des Gehäuses 18 aus zugänglich sein, deren Abmessungen mit der kleinen und der großen Kantenlänge 11, 13 korrespondieren. Meist liegt diese Seite derjenigen Seite des Gehäuses 18 gegenüber, an welcher - je nach Konfiguration der Umrichterbaugruppe - der Lastanschluss 9, die Lastanschlüsse 9, 17, die Ausgangsanschlüsse 5, 6 und/oder der Lastanschluss 9 und der zweite Ausgangsanschluss 6 angeordnet sind.

Im Falle der Ausgestaltung gemäß FIG 3, wenn also die direkte Verbindung der Phasen der Wechselrichter 1, 2 lösbar ist, aber nicht den Lastanschluss 9 trägt, können das Stecken und das Lösen der Kontaktbrücke 13 vorzugsweise erfolgen, ohne das Gehäuse 18 öffnen zu müssen. Beispielsweise können die Kontakte der lösbaren Verbindung, die ortsfest auf dem Basisteil 12 angeordnet sind, als Teil einer entsprechenden Steckverbindung ausgebildet sein, die von außerhalb des Gehäuses 18 aus zugänglich ist. Falls die Kontaktbrücke 13 ein separates, nicht mit dem Gehäuse 18 verbundenes Element ist, weist das Gehäuse 18 im Falle der Umrichterbaugruppe von FIG 3 weiterhin vorzugsweise eine Halterung und/oder Aufnahme auf, in welcher die Kontaktbrücke 13 gehalten und aufgenommen ist, wenn sie nicht auf die Kontakte der lösbaren Verbindung aufgesteckt ist.

Die Dimensionierung der Wechselrichter 1, 2 und hiermit korrespondierenden auch die Dimensionierung der Ausgangsanschlüsse 5, 6 und der Lastanschlüsse 9, 17 kann nach Bedarf sein. Vorzugsweise sind insbesondere die Wechselrichter 1, 2 jedoch derart dimensioniert, dass die maximalen Phasenströme I1, I2 kleiner als 1000 A sind. Vorzugsweise sind die maximalen Phasenströme I1, I2 sogar kleiner als 100 A. Insbesondere können die maximalen Phasenströme I1, I2 unterhalb von 50 A liegen, beispielsweise bei ca. 15 A bis ca. 20 A.

Die vorliegende Erfindung weist viele Vorteile auf. Insbesondere kann mit einer relativ geringen Produktvielfalt an Umrichterbaugruppen - einschließlich der sich dadurch ergebenden Fertigungs- und Kostenvorteile - ein breites Anwendungs- und Leistungsspektrum abgedeckt werden.

Zusammengefasst betrifft die vorliegende Erfindung somit folgenden Sachverhalt:
Eine Umrichterbaugruppe weist mindestens einen ersten und einen zweiten Wechselrichter 1, 2 auf. Den Wechselrichtern 1, 2 wird einheitlich eine Eingangsspannung U zugeführt. Die Wechselrichter 1, 2 konvertieren die ihnen zugeführte Eingangsspannung U jeweils in eine Wechselspannung U1, U2 mit mehreren Phasen. Die Wechselrichter 1, 2 enthalten als Schaltelemente 3 Siliziumcarbid-MOSFETs. Die Phasen der Wechselrichter 1, 2 sind phasenweise elektrisch direkt miteinander und mit einem jeweiligen Kontakt eines Lastanschlusses 9 der Umrichterbaugruppe verbunden. Dadurch steht an dem jeweiligen Kontakt des Lastanschlusses 9 sowohl die vom ersten Wechselrichter 1 als auch die vom zweiten Wechselrichter 2 abgegebene Spannung U1, U2 der jeweiligen Phase an. Die Umrichterbaugruppe weist eine Steuereinrichtung 11 auf, welche die Wechselrichter 1, 2 derart koordiniert ansteuert, dass die Wechselspannung U1, U2 der jeweiligen Phase von den Wechselrichtern 1, 2 gleichphasig an den jeweiligen Kontakt des Lastanschlusses 9 geschaltet wird.

Obwohl die Erfindung im Detail durch das bevorzugte Ausführungsbeispiel näher illustriert und beschrieben wurde, so ist sie ausschließlich durch die Ansprüche definiert.

**Patentansprüche**

1. Umrichterbaugruppe,

 - wobei die Umrichterbaugruppe mindestens einen ersten und einen zweiten Wechselrichter (1,2) sowie eine Steuereinrichtung (11) aufweist,
 - wobei den Wechselrichtern (1,2) einheitlich eine Eingangsspannung (U) zugeführt wird und die Wechselrichter (1,2) die ihnen zugeführte Eingangsspannung (U) jeweils in eine Wechselspannung (U1,U2) mit mehreren Phasen konvertieren,
 - wobei die Wechselrichter (1,2) als Schaltelemente (3) Siliziumcarbid-MOSFETs enthalten,
 - wobei die Phasen des zweiten Wechselrichters (2) über eine lösbare Verbindung phasenweise elektrisch direkt mit den Phasen des ersten Wechselrichters (1) und einem jeweiligen Kontakt eines Lastanschlusses (9) der Umrichterbaugruppe verbunden sind und die Phasen des ersten Wechselrichters (1) unlösbar oder über die lösbare Verbindung phasenweise elektrisch direkt mit dem jeweiligen Kontakt des Lastanschlusses (9) verbunden sind,
 - wobei von den Wechselrichtern (1,2) abgegebene Phasenströme (I1,I2) individuell erfasst und der Steuereinrichtung (11) zugeführt werden,
 - wobei bei hergestellter Verbindung an dem jeweiligen Kontakt des Lastanschlusses (9) sowohl die vom ersten Wechselrichter (1) als auch die vom zweiten Wechselrichter (2) abgegebene Spannung (U1,U2) der jeweiligen Phase ansteht und die Steuereinrichtung (11) die Wechselrichter (1,2) derart koordiniert ansteuert, dass die Wechselspannung (U1,U2) der jeweiligen Phase von den Wechselrichtern (1,2) gleichphasig an den jeweiligen Kontakt des Lastanschlusses (9) geschaltet wird,
 - wobei bei gelöster Verbindung an dem jeweiligen Kontakt des Lastanschlusses (9) oder einem jeweiligen Kontakt eines vom Lastanschluss (9) verschiedenen ersten Ausgangsanschlusses (5) die vom ersten Wechselrichter (1) abgegebene Spannung (U1) der jeweiligen Phase ansteht, an einem jeweiligen Kontakt eines zweiten Ausgangsanschlusses (6) die vom zweiten Wechselrichter (2) abgegebene Spannung (U2) der jeweiligen Phase ansteht und die Steuereinrichtung (11) die Wechselrichter (1,2) unabhängig voneinander ansteuert,
 - wobei die Wechselrichter (1,2) und die Steuereinrichtung (11) auf einem Basisteil (12) der Umrichterbaugruppe angeordnet sind und
 - wobei die lösbare Verbindung auf dem Basisteil (12) ortsfest angeordnete Kontakte und eine mit diesen Kontakten verbindbare und von diesen Kontakten lösbare mehrphasige Kontaktbrücke (13) aufweist.

2. Umrichterbaugruppe nach Anspruch 1, **dadurch gekennzeichnet , dass** die Umrichterbaugruppe ein Gehäuse (18) aufweist, von dem zumindest die Wechselrichter (1,2) und die Steuereinrichtung (11) berührsicher umgeben sind.

3. Umrichterbaugruppe nach Anspruch 2, **dadurch gekennzeichnet, dass** die Eingangsspannung (U) den Wechselrichtern (1,2) über eine vorkonfektionierte, von außerhalb des Gehäuses (18) zugängliche Steckverbindung (19) zugeführt wird.

4. Umrichterbaugruppe nach Anspruch 2, **dadurch gekennzeichnet, dass** das Gehäuse (18) quaderförmig mit einer kleinen, einer mittleren und einer großen Kantenlänge (11,12,13) ausgebildet ist, dass die kleine Kantenlänge (11) maximal 120 mm beträgt, dass die mittlere Kantenlänge (12) zwischen 200 mm und 300 mm liegt und dass die große Kantenlänge (13) mindestens 300 mm beträgt.

5. Umrichterbaugruppe nach Anspruch 4, **dadurch gekennzeichnet, dass** die Eingangsspannung (U) den Wechselrichtern (1,2) über eine vorkonfektionierte, von außerhalb des Gehäuses (18) zugängliche Steckverbindung (19) zugeführt wird.

6. Umrichterbaugruppe nach Anspruch 5, **dadurch gekennzeichnet, dass** die Steckverbindung (19) von einer Seite des Gehäuses (18) aus zugänglich ist, deren Abmessungen mit der kleinen und der großen Kantenlänge (11, 13) korrespondieren.

7. Umrichterbaugruppe nach einem der obigen Ansprüche, **dadurch gekennzeichnet, dass** den Kontakten des Lastanschlusses (9) über die Wechselrichter (1,2) jeweilige Phasenströme (I1,I2) zuführbar sind und dass die Phasenströme (I1,I2) kleiner als 1000 A sind, insbesondere kleiner als 100 A.

8. Umrichterbaugruppe nach einem der obigen Ansprüche, **dadurch gekennzeichnet, dass** die Steuereinrichtung (11) selbsttätig erkennt, ob die Phasen der Wechselrichter (1,2) über die lösbare Verbindung phasenweise direkt miteinander verbunden sind oder nicht, und dementsprechend entweder die Wechselrichter (1, 2) koordiniert oder unabhängig voneinander ansteuert.

9. Umrichterbaugruppe nach einem der Ansprüche 1 bis 8, **dadurch gekennzeichnet, dass** der erste Ausgangsanschluss (5) nicht vorhanden ist, dass die Kontakte der lösbaren Verbindung von den Kontakten des Lastanschlusses (9) und des zweiten Ausgangsanschlusses (6) verschiedene Kontakte sind und dass in dem Fall, dass die Phasen der Wechselrichter (1,2) über die lösbare Verbindung nicht miteinander verbunden sind, am jeweiligen Kontakt des Lastanschlusses (9) die vom ersten Wechselrichter (1) abgegebene Spannung (U1) der jeweiligen Phase ansteht.

10. Umrichterbaugruppe nach Anspruch 9, **dadurch gekennzeichnet, dass** durch das direkte Verbinden der Phasen der Wechselrichter (1,2) miteinander der zweite Ausgangsanschluss (6) von den Phasen des zweiten Wechselrichters (2) getrennt wird und durch das Trennen der Phasen der Wechselrichter (1,2) voneinander der zweite Ausgangsanschluss (6) mit den Phasen des zweiten Wechselrichters (2) verbunden wird.

11. Umrichterbaugruppe nach Anspruch 9 oder 10, **dadurch gekennzeichnet , dass** die mehrphasige Kontaktbrücke (13) als mehrphasiger, auf dem Basisteil (12) angeordneter, bistabiler Schalter ausgebildet ist.

12. Umrichterbaugruppe nach Anspruch 11, **dadurch gekennzeichnet, dass** der mehrphasige Schalter an einer Frontseite der Umrichterbaugruppe angeordnet ist, an welcher auch der Lastanschluss (9) und der zweite Ausgangsanschluss (6) angeordnet sind.

13. Umrichterbaugruppe nach Anspruch 9 oder 10, **dadurch gekennzeichnet, dass** die Wechselrichter (1,2) und die Steuereinrichtung (11) auf einer Leiterplatte (16) angeordnet sind, dass auf der Leiterplatte (16) die Kontakte der lösbaren Verbindung angeordnet sind und dass durch manuelles Stecken der Kontaktbrücke (13) ein Überbrücken der Kontakte erfolgt.

14. Umrichterbaugruppe nach Anspruch 13 in Verbindung mit einem der Ansprüche 2 bis 6, **dadurch gekennzeichnet, dass** die ortsfest auf dem Basisteil (12) angeordneten Kontakte der lösbaren Verbindung als Teil einer Steckverbindung ausgebildet sind, die von außerhalb des Gehäuses (18) aus zugänglich ist.

15. Umrichterbaugruppe nach Anspruch 14, **dadurch gekennzeichnet, dass** die Kontaktbrücke (13) ein separates, nicht mit dem Gehäuse (18) verbundenes Element ist und dass das Gehäuse (18) eine Halterung und/oder Aufnahme aufweist, in welcher die Kontaktbrücke (13) gehalten und aufgenommen ist, wenn sie nicht auf die Kontakte der lösbaren Verbindung aufgesteckt ist.

16. Umrichterbaugruppe nach einem der Ansprüche 1 bis 8, **dadurch gekennzeichnet, dass** der erste Ausgangsanschluss (5) vorhanden ist, dass die Kontakte der lösbaren Verbindung mit den Kontakten der Ausgangsanschlüsse (5,6) identisch sind und dass der Lastanschluss (9) auf der mehrphasigen Kontaktbrücke (13) angeordnet ist.

17. Umrichterbaugruppe nach Anspruch 16, **dadurch gekennzeichnet, dass** die Ausgangsanschlüsse (5,6) kleiner dimensioniert sind als der Lastanschluss (9).

## Claims

1. Converter assembly,

   - wherein the converter assembly has at least one first and one second inverter (1, 2) and a control device (11),
   - wherein an input voltage (U) is fed uniformly to the inverters (1, 2) and the inverters (1, 2) convert the input voltage (U) fed to them into an alternating voltage (U1, U2) with a number of phases in each case,
   - wherein the inverters (1, 2) contain silicon carbide MOSFETS as switching elements (3),
   - wherein the phases of the second inverter (2) are connected electrically directly on a phasewise basis to the phases of the first inverter (1) via a detachable connection and a respective contact of a load terminal (9) of the converter assembly and the phases of the first inverter (1) are connected electrically directly on a phase-wise basis to the respective contact of the load terminal (9) non-detachably or via the detachable connection,

- wherein phase currents (I1, 12) output by the inverters (1, 2) are captured individually and supplied to the control device (11),

- wherein when the connection with the respective contact of the load terminal (9) is established, both the voltage (U1, U2) of the respective phase output by the first inverter (1) and also that output by the second inverter (2) is present and the control device (11) controls the inverters (1, 2) in a coordinated manner such that the alternating voltage (U1, U2) of the respective phase of the inverters (1, 2) is connected in-phase with the respective contact of the load terminal (9),

- wherein when the connection to the respective contact of the load terminal (9) or a respective contact of a first output connection (5) which differs from the load terminal (9) is detached, the voltage (U1) of the respective phase output by the first inverter (1) is present, at a respective contact of a second output terminal (6) the voltage (U2) of the respective phase output by the second inverter (2) is present and the control device (11) controls the inverters (1, 2) independently of one another,

- wherein the inverters (1, 2) and the control device (11) are arranged on a base part (12) of the converter assembly and

- wherein the detachable connection has contacts arranged at fixed positions on the base part (12) and a multiphase contact bridge (13) which can be connected with and detached from these contacts.

2. Converter assembly according to claim 1, **characterised in that** the converter assembly has a housing (18) which surrounds at least the inverters (1, 2) and the control device (11) in a contact-safe manner.

3. Converter assembly according to claim 2, **characterised in that** the input voltage (U) is fed to the inverters (1, 2) via a prefabricated plug-in connection (19) which is accessible from outside of the housing (18).

4. Converter assembly according to claim 2, **characterised in that** the housing (18) is embodied in a box shape with a small, a medium and a large edge length (11, 12, 13), that the small edge length (11) amounts at most to 120 mm, that the medium edge length (12) lies between 200 mm and 300 mm, and that the large edge length (13) amounts at least to 300 mm.

5. Converter assembly according to claim 4, **characterised in that** the input voltage (U) is fed to the inverters (1, 2) via a prefabricated plug-in connection (19) which is accessible from outside of the housing (18).

6. Converter assembly according to claim 5, **characterised in that** the plug-in connection (19) is accessible from one side of the housing (18), the dimensions of which correspond to the small and the large edge length (11, 13).

7. Converter assembly according to one of the above claims, **characterised in that** respective phase currents (I1, I2) can be fed to the contacts of the load terminal (9) by way of the inverters (1, 2), and that the phase currents (I1, I2) are smaller than 1000 A, in particular smaller than 100 A.

8. Converter assembly according to one of the above claims, **characterised in that** the control device (11) automatically identifies whether or not the phases of the inverters (1, 2) are directly connected to one another on a phase-wise basis via the detachable connection, and accordingly controls the inverters (1, 2) either in a coordinated manner or independently of one another.

9. Converter assembly according to one of claims 1 to 8, **characterised in that** the first output terminal (5) is not present, that the contacts of the detachable connection are contacts which differ from the contacts of the load terminal (9) and the second output terminal (6), and that in the event that the phases of the inverters (1, 2) are not connected to one another via the detachable connection, the voltage (U1) of the respective phase output by the first inverter (1) is present at the respective contact of the load terminal (9).

10. Converter assembly according to claim 9, **characterised in that** the second output terminal (6) is separated from the phases of the second inverter (2) by directly connecting the phases of the inverters (1, 2) with one another, and the second output terminal (6) is connected to the phases of the second inverter (2) by separating the phases of the inverters (1, 2) from one another.

11. Converter assembly according to claim 9 or 10, **characterised in that** the multiphase contact bridge (13) is embodied as a multiphase bistable switch arranged on the base part (12).

12. Converter assembly according to claim 11, **characterised in that** the multiphase switch is arranged on a front side of the converter assembly, on which the load terminal (9) and the second output terminal (6) are also arranged.

13. Converter assembly according to claim 9 or 10, **characterised in that** the inverters (1, 2) and the control device (11) are arranged on a circuit board (16), that the contacts of the detachable connection are arranged on the circuit board (16), and that a bridging of the contacts is carried out by manual insertion of the contact bridge (13).

14. Converter assembly according to claim 13 in conjunction with one of claims 2 to 6, **characterised in that** the contacts of the detachable connection arranged at fixed positions on the base part (12) are embodied as part of a plug-in connection which is accessible from outside of the housing (18) .

15. Converter assembly according to claim 14, **characterised in that** the contact bridge (13) is a separate element not connected to the housing (18), and that the housing (18) has a holder and/or receptacle in which the contact bridge (13) is held and received when it is not pushed onto the contacts of the detachable connection.

16. Converter assembly according to one of claims 1 to 8, **characterised in that** the first output terminal (5) is present, that the contacts of the detachable connection are identical to the contact of the output terminals (5, 6), and that the load terminal (9) is arranged on the multiphase contact bridge (13).

17. Converter assembly according to claim 16, **characterised in that** the output terminals (5, 6) are dimensioned smaller than the load terminal (9).

## Revendications

1. Module de convertisseur,

   - dans lequel le module de convertisseur a au moins un premier et un deuxième onduleurs (1, 2), ainsi qu'un dispositif (11) de commande,
   - dans lequel on applique aux onduleurs (1, 2), uniformément, une tension (U) d'entrée et les onduleurs (1, 2) transforment la tension (U) d'entrée, qui leur est appliquée, respectivement, en une tension (U1, U2) alternative ayant plusieurs phases,
   - dans lequel les onduleurs (1, 2) comportent, comme éléments (3) d'interruption, des MOSFETS au carbure de silicium,
   - dans lequel les phases du deuxième onduleur (2) sont connectées par une liaison amovible, phase par phase, directement électriquement, aux phases du premier onduleur (1) et à un contact respectif d'une borne (9) de charge du module de convertisseur et les phases du premier onduleur (1) sont connectées de manière inamovible ou par la liaison amovible, phase par phase, directement électriquement, au contact respectif de la borne (9) de charge,
   - dans lequel des courants (I1, I2) de phase donnés par les onduleurs (1, 2) sont détectés individuellement et sont envoyés au dispositif (11) de commande,
   - dans lequel, lorsque la liaison au contact respectif de la borne (9) de charge est produite, il s'applique tant la tension (U1, U2) de la phase respective donnée par le premier onduleur (1), qu'également par le deuxième onduleur (2) et le dispositif (11) de commande commande, de manière coordonnée, les onduleurs (1, 2), de manière à appliquer la tension (U1, U2) alternative de la phase respective des onduleurs (1, 2) suivant une même phase au contact respectif de la borne (9) de charge,
   - dans lequel, lorsque la liaison est défaite, il s'applique au contact respectif de la borne (9) de charge ou à un contact respectif d'une première borne (5) de sortie différente de la borne (9) de charge la tension (U1) de la phase respective, donnée par le premier onduleur (1), à un contact respectif d'une deuxième borne (6) de sortie la tension (U2) de la phase respective, donnée par le deuxième onduleur (2), et le dispositif (11) de commande commande les onduleurs (1, 2) indépendamment l'un de l'autre,
   - dans lequel les onduleurs (1, 2) et le dispositif (11) de commande sont montés sur une partie (12) de base du module de convertisseur et
   - dans lequel la liaison amovible a des contacts montés à poste fixe sur la partie (12) de base et un pont (13) de contact polyphasé pouvant être connecté à ces contacts et pouvant en être déconnecté.

2. Module de convertisseur suivant la revendication 1, **caractérisé en ce que** le module de convertisseur a un boîtier (18), dont au moins les onduleurs (1, 2) et le dispositif (11) de commande sont entourés à l'épreuve d'un toucher.

3. Module de convertisseur suivant la revendication 2, **caractérisé en ce que** la tension (U) d'entrée est appliquée aux onduleurs (1, 2) par une liaison (19) par enfichage préfabriquée et accessible de l'extérieur du boîtier (18).

4. Module de convertisseur suivant la revendication 2, **caractérisé en ce que** le boîtier (18) est parallélépipédique, en ayant une longueur (11, 12, 13) d'arête petite, moyenne et grande, **en ce que** la longueur (11) d'arête petite est d'au maximum 120 mm, **en ce que** la longueur (12) d'arête moyenne est comprise entre 200 mm et 300 mm et **en ce que** la grande longueur (13) d'arête est d'au moins 300 mm.

5.  Module de convertisseur suivant la revendication 4, **caractérisé en ce que** la tension (U) d'entrée est appliquée aux onduleurs (1, 2) par une liaison (19) par enfichage préfabriquée et accessible de l'extérieur du boîtier (18).

6.  Module de convertisseur suivant la revendication 5, **caractérisé en ce que** la liaison (19) par enfichage est accessible par un côté du boîtier (18), dont les dimensions correspondent à la petite et à la grande longueur (11, 13) d'arête.

7.  Module de convertisseur suivant l'une des revendications précédentes, **caractérisé en ce qu'**au contact de la borne (9) de charge, peuvent être envoyés, par les onduleurs (1, 2), des courants (I1, I2) de phase respectifs et **en ce que** les courants (I1, I2) de phase sont moins intenses que 1000 A, notamment moins intenses que 100 A.

8.  Module de convertisseur suivant l'une des revendications précédentes, **caractérisé en ce que** le dispositif (11) de commande détecte automatiquement si les phases des onduleurs (1, 2) sont connectées directement les unes aux autres, phase par phase, par la liaison amovible ou non, et coordonne ou commande, indépendamment l'un de l'autre en conséquence, les onduleurs (1, 2).

9.  Module de convertisseur suivant l'une des revendications 1 à 8, **caractérisé en ce qu'**il n'y a pas la première borne (5) de sortie, **en ce que** les contacts de la liaison amovible sont des contacts différents des contacts de la borne (9) de charge et de la deuxième borne (9) de sortie et **en ce que**, dans le cas où les phases des onduleurs (1, 2) ne sont pas connectées entre elles par la liaison amovible, il s'applique au contact respectif de la borne (9) de charge, la tension (U1) de la phase respective donnée par le premier onduleur (1).

10.  Module de convertisseur suivant la revendication 9, **caractérisé en ce que**, par la connexion directe des phases des onduleurs (1, 2) entre eux, la deuxième borne (6) de sortie est séparée des phases du deuxième onduleur (2) et, par la séparation des phases des onduleurs (1, 2), l'une de l'autre, la deuxième borne (6) de sortie est connectée aux phases du deuxième onduleur (2).

11.  Module de convertisseur suivant la revendication 9 ou 10, **caractérisé en ce que** le pont (13) de contact polyphasé est constitué sous la forme d'un interrupteur bistable polyphasé monté sur la partie (12) de base.

12.  Module de convertisseur suivant la revendication 11, **caractérisé en ce que** l'interrupteur polyphasé est monté sur un côté avant du module de convertisseur où la borne (9) de charge et la deuxième borne (6) de sortie se trouvent également.

13.  Module de convertisseur suivant la revendication 9 ou 10, **caractérisé en ce que** les onduleurs (1, 2) et le dispositif (11) de commande sont montés sur une plaquette (16) à circuit imprimé, **en ce que** les contacts de la liaison amovible sont montés sur la plaquette (16) à circuit imprimé et **en ce qu'**un shuntage des contacts s'effectue par enfichage manuel du pont (13) de contact.

14.  Module de convertisseur suivant la revendication 13 en liaison avec l'une des revendications 2 à 6, **caractérisé en ce que** les contacts, montés à poste fixe sur la partie (12) de base, de la liaison amovible sont constitués en partie d'une liaison par enfichage qui est accessible de l'extérieur du boîtier (18).

15.  Module de convertisseur suivant la revendication 14, **caractérisé en ce que** le pont (13) de contact est un élément distinct non relié au boîtier (18) et **en ce que** le boîtier (18) a une fixation et/ou un logement, dans lequel le pont (13) de contact est maintenu et reçu, s'il n'est pas enfiché sur les contacts de la liaison amovible.

16.  Module de convertisseur suivant l'une des revendications 1 à 8, **caractérisé en ce qu'**il y a la première borne (5) de sortie, **en ce que** les contacts de la liaison amovible sont les mêmes que les contacts des bornes (5, 6) de sortie et **en ce que** la borne (9) de charge se trouve sur le pont (13) de contact polyphasé.

17.  Module de convertisseur suivant la revendication 16, **caractérisé en ce que** les bornes (5, 6) de sortie ont des dimensions plus petites que la borne (9) de charge.

# FIG 1

# FIG 2

# FIG 3

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9209137 A1
- US 20040262057 A1

**In der Beschreibung aufgeführte Nicht-Patentliteratur**

- Analysis of a SiC Three-Phase Voltage Source Inverter Under Various Current and Power Factor Operations. **DI HAN et al.** IECON 2013 - 39TH ANNUAL CONFERENCE OF THE IEEE INDUSTRIAL ELECTRONICS SOCIETY. IEEE, 10. November 2013, 447-452